Europäisches Patentamt

**European Patent Office**

**Office européen des brevets**

(11) Publication number: **0 148 104**
**A2**

(12) **EUROPEAN PATENT APPLICATION**

(21) Application number: **84630203.2**

(22) Date of filing: **20.12.84**

(51) Int. Cl.⁴: **B 29 C 69/00**
**B 29 C 49/00, B 29 D 31/00**
**F 16 F 9/04**

(30) Priority: **23.12.83 US 564797**

(43) Date of publication of application:
**10.07.85 Bulletin 85/28**

(84) Designated Contracting States:
**DE FR GB IT SE**

(71) Applicant: **THE GOODYEAR TIRE & RUBBER COMPANY**
**1144 East Market Street**
**Akron, Ohio 44316(US)**

(72) Inventor: **Shriver, Clem Branum**
**40 Comet Road**
**Clinton, Ohio 44216(US)**

(72) Inventor: **Kern, Charles Louis, Jr.**
**7601 Driftwood Circle**
**North Canton, Ohio 44720(US)**

(72) Inventor: **Burkley, Thomas Edward**
**315 Mull Avenue**
**Akron, Ohio 44313(US)**

(72) Inventor: **Warmuth, Ivan Joseph**
**1254 Lily Street**
**Akron, Ohio 44301(US)**

(74) Representative: **Stanley, Michael Gordon**
**GOODYEAR INTERNATIONAL TIRE TECHNICAL CENTER**
**PATENT DEPARTMENT Avenue Gordon Smith**
**L-7750 Colmar-Berg(LU)**

(54) Method of making an elastic air spring member and said member.

(57) This invention provides a method of making an elastic air spring member and said member by forming a polyester preform (10), sometimes called a parison, blowing said preform to the shape of said member and at least shaping one end portion to give a surface (41) for sealing said member in the air spring device, said shaping usually being grinding or cutting away to give a sealing surface (41) although the neck (20) of the preform can be used to attach blown preform to the air line (14) and thus obviate the need to cut away a portion.

FIG. 6

# METHOD OF MAKING AN ELASTIC
## AIR SPRING MEMBER AND SAID MEMBER

## Technical Field

This invention relates to a method for producing an elastic air spring member suitable for use in an air spring device to resiliently hold two masses apart and to said elastic air spring member, preferably where the sleeve is of the lobe type. Specifically this invention relates to an elastic air spring member having an opening and useful as a dunnage bag or an air spring.

## Background

The problem of resiliently holding two masses apart is experienced in numerous industries, for example in anchoring cargo or in the spring systems of vehicles. Air springs, or fluid springs as they are sometimes called, are used widely on motor vehicles and generally are divided into two broad classes; the sleeve type and the lobe type which can be either single or multilobe. The terms "sleeve" and "lobe" designate the type and nature of the elastic air spring member used in a pneumatic device, which may contain a piston for attachment of one end of the elastic air spring member to form an enclosed flexible air chamber which upon application of load forces to the device acts to absorb the shock.

## Disclosure and Practice of the Invention

This invention provides a method of making an elastic air (fluid) spring member that can be used in an air (fluid) spring device or with suitable adaptors as a dunnage means for holding cargo. The elastic air spring member of this invention is made by forming a preform of polyester in shape preferably of a preform, blow molding said preform to the shape of said member, such as one having a lobe shape, shaping by cutting or grinding away at least a portion of the blown preform to form a surface for sealing of said member in the fluid spring device against leakage of fluid, if needed. The polyester used to injection mold the preform preferably has an intrinsic viscosity of 0.72 to 1.04. Generally, it is desired that the degree of blowing be sufficient to stretch the polyester in the hoop direction three to five times in the axial direction two to three times.

The preform can be formed in any of the well known manners but preferably is injected molded in the size desired for the degree of stretch desired during the blow molding step to develop the desired physical properties of tensile in the polyester. The polyesters useful in this invention should be able to be stretched about 2 to 5 times. A preferred polyester is one in the unstretched condition that is amorphous but has the property of becoming oriented when stretched. For instance, amorphous unoriented polyethylene terephthalate of 0.72 to 1.04 intrinsic viscosity has a yield strength of 55 mPa (8,000 psi), but can be stretched to give a highly molecular oriented polymer that has a yield strength of 241 mPa (35,000 psi). Thus the polyester preferably should have an intrinsic viscosity of 0.72 to 1.04 as measured on 0.1 gram in 25 ml of phenyltetrachlorothane and a temperature of 30°C. These polyesters are the condensation product of the dicarboxylic acids and their anhydrides of preferably 6 to 12 carbon atoms and the glycols of 2 to 12 carbon atoms, or their ethers. The polyesters of terephthalic acid and ethylene glycol are readily available in suitable viscosity ranges for use in this invention and yield elastic air spring members that perform very well.

The heated preform is placed in a blow mold and then is blown to stretch the preform to fill the mold in a manner similar to blow molding bottles. The blowing of the preform preferably stretches the polyester at least twice its original dimension and preferably three to five times in the hoop or circumferential direction and two to three times in the axial direction. The preform must be at a temperature sufficiently high to permit the polyester to be blown. Polyethylene terephthalate and the copolyesters of terephthalate can be blow molded at about 85 to 100°C. to form an elastic air spring member in accordance with this invention.

The nature of this invention and its advantages can be seen more readily by reference to the drawings where

Fig. 1 is an elevational perspective view of a polyester preform that has been injection molded at a temperature just about the polymer melt temperature;

Fig. 2 is a partial cross section of a blow mold showing the blown preform therein;

Fig. 3 is a partial cross sectional view in elevation of a blown preform where only one portion of preform is cut away, if necessary, to form the elastic air spring member;

Fig. 4 is a diagrammatic view of an elastic air spring member resting between two plates of the air spring device;

Fig. 5 is a partial cross-sectional view showing how the preform is stretched to form a single lobe air spring member; and

Fig. 6 shows the single lobe air spring member of Fig. 5 trimmed and resting between end caps between plates of the air spring device.

Description of the Preferred Embodiments

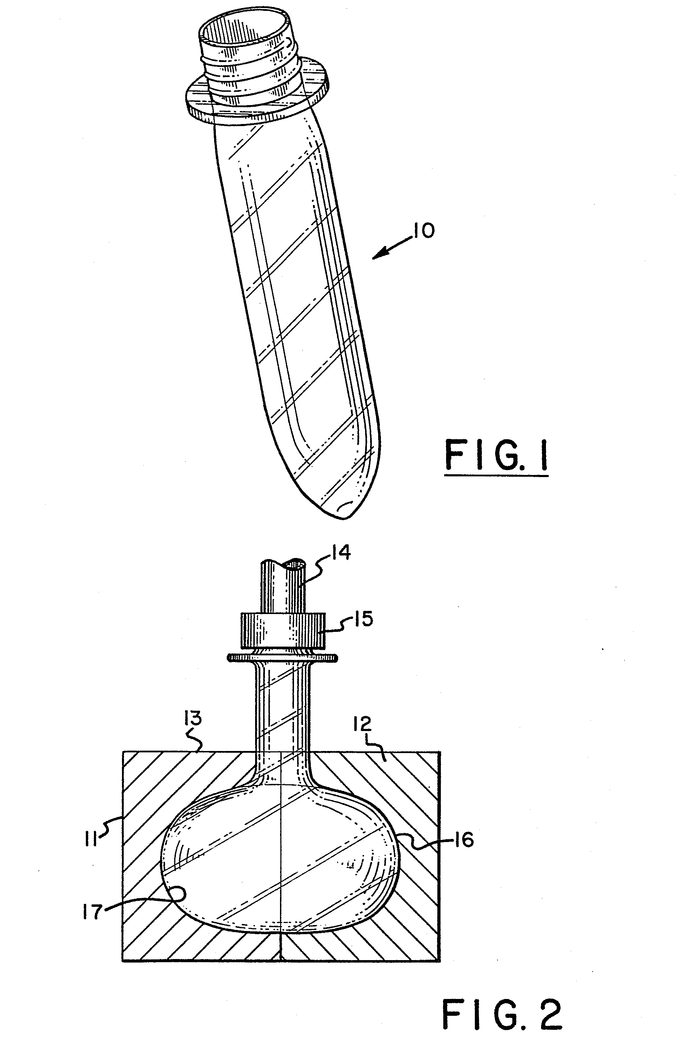

The preform 10 of Fig. 1 is injection molded in the shape and the size desired for the stretch dimension of the elastic air spring member. Preferably the preform 10 while at or above its blow temperature is placed in the mold 11 of Fig. 2 composed of two halves 12 and 13 respectively. The preform is heated to a temperature, usually 85 to 100°C. particularly when the polyester is polyethylene terephthalate before being placed in the mold.

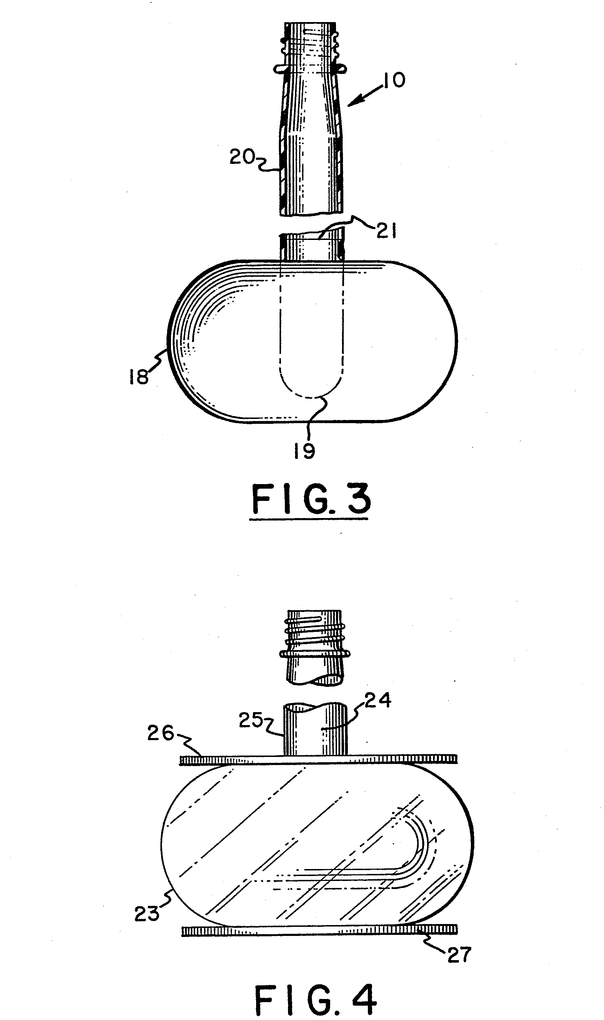

The blow line 14 is attached by means 15 to the open end of the preform and air introduced to cause the preform to blow or stretch until it contacts walls 16 to the mold and takes shape 17 shown in cross section in Fig. 2 or as shown in Figs. 3, 4, 5 and 6.

In the embodiment shown in Fig. 3 the blown preform 10 when removed from the mold shows the expanded portion 18 of single lobe form relative to original shape 19 of the parison and before the end portion 20 was cut away, if necessary, on trim line 21 to give the single lobe air spring member 23 best seen in Fig. 4. It should be noted the single lobe air spring member 23 has a single opening 24 formed by neck 25 and the member is positioned in operational relationship between top plate 26 and bottom plate 27 of the usual air spring device and thus is ready to have the air line attached to neck 25. Where the spring has a single opening, it is possible to design the screw threaded opening 43 of the preform to serve as the connection to the airline 42, thus there is no need to cut away to form the seal.

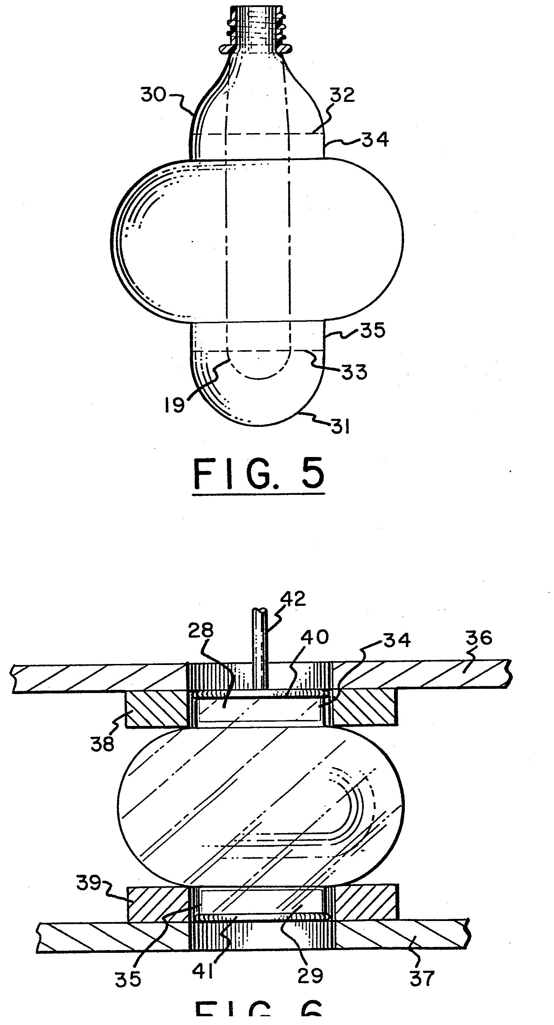

Another embodiment is shown in Figs. 5 and 6 where the air spring member has the traditional top opening 28 and bottom opening 29. The top end 30 and bottom end 31 of the blown preform are cut away along trim lines 32 and 33 respectively to leave attaching shoulders 34 and 35 respectively.

In Fig. 6 the blown preform having the ends cut away is shown positioned between load members 36 and 37 respectively. The shoulders 34 and 35 are resting inside collars 38 and 39 respectively with sealing caps 40 and 41 closing the top and bottom openings. The cap 40 is fitted with an air line 42 to permit the air envelope to be pressurized in a normal manner. The sealing caps instead of being as shown could be any of the conventional piston sealing means.

It is preferred that the sleeve be operated so a pressure of at least 31 mPa (45 psi) is maintained at all times on the sleeve to give the sleeve resistance to a tendency to wrinkle on itself at very low internal pressures. Also, it is possible to use more than a single air tube 42 in some assemblies to advantage. Thus, with some systems line 42 could be in each sealing cap 40 and 41.

A polyethylene terephthalate sleeve type member formed by blow molding a preform and cutting away its ends withstood 1650 psi static load at 80 psi air pressure on the sleeve in the air spring and was capable of acting as a satisfactory air spring member.

Also a polyester terephthalate blown air spring member of the shape shown in Fig. 4 could serve as a low cost throwaway dunnage bag of the conventional torus shape.

While certain representative embodiments and details have been shown for the purpose of illustrating the invention it will be apparent to those skilled in this art that various changes and modifications may be made therein without departing from the spirit or scope of the invention.

## CLAIMS

1.  A method for producing an elastic air spring member suitable for use in an air spring device to resiliently hold two masses apart comprising the steps of forming a preform of polyester, blow molding said preform to the shape of said air spring member and providing a surface for sealing of said air spring member.

2.  The method of claim 1 wherein the surface for sealing is provided by removing a portion of said blown preform.

3.  The method of Claim 1 wherein the preform is blown to give the polyester a stretch in the hoop to axial direction of three to five and two to three times respectively.

4.  The method of Claim 1 wherein the polyester is a polyethylene terephthalate.

5.  The method of Claim 4 wherein the polyethylene terephthalate has an intrinsic viscosity of 0.72 to 1.04.

6.  The method of Claim 1 wherein the polyester has an intrinsic viscosity of 0.72 to 1.04.

7.  A dunnage bag including a body portion composed of polyester which has been stretched in hoop direction from three to five times and two to three times in the axial direction.

1 / 3

0148104

FIG. 1

FIG. 2

0148104

10

20

21

18

19

# FIG. 3

24

25

26

23

27

# FIG. 4

0148104

FIG. 5

FIG. 6